# EUROPÄISCHE PATENTSCHRIFT

(11) **EP 2 789 753 B1**
(45) Veröffentlichungstag und Bekanntmachung des Hinweises auf die Patenterteilung: **26.10.2016**
(21) Anmeldenummer: 14163581.3
(22) Anmeldetag: 04.04.2014
(51) Int. Cl.: E03C 1/18, B23P 15/00

(54) **Spülbecken und Verfahren zum Herstellen eines Spülbeckens**
Sink and method for producing a sink
Évier et procédé de fabrication d'un évier

(30) Priorität: 09.04.2013 DE 102013206211
(43) Veröffentlichungstag der Anmeldung: 15.10.2014
(73) Patentinhaber: BLANCO GmbH + Co KG, 75038 Oberderdingen (DE)
(72) Erfinder: Nicklas, Manuel, 75031 Eppingen (DE); Ayhan, Murat, 75038 Oberderdingen (DE); Bauer, Michael, 76669 Bad Schönborn (DE); Hamann, Mirko, 74363 Güglingen (DE); Ring, Viktor, 75015 Bretten-Büchig (DE)
(74) Vertreter: Hoeger, Stellrecht & Partner Patentanwälte mbB

(56) Entgegenhaltungen:
- WO-A1-2007/031288
- DE-U1- 20 103 473
- GB-A- 289 210
- US-A- 3 357 092

## Beschreibung

Die vorliegende Erfindung betrifft ein Spülbecken, welches eine Bodenwand, einen Beckenflansch und mehrere den Beckenflansch mit der Bodenwand verbindende Seitenwände, die jeweils mindestens einen gekrümmten Seitenwand-Randbereich aufweisen, umfasst,
wobei Seitenwand-Randbereiche von zwei einander benachbarten Seitenwänden mittels einer Schweißnaht miteinander verbunden sind und zusammen einen gekrümmten Seitenwand-Eckbereich des Spülbeckens bilden, und wobei jede Seitenwand einstückig mit einem Beckenflanschabschnitt verbunden ist.

Solche Spülbecken sind auch als "Radiusbecken" bekannt, weil sie im Seitenwand-Eckbereich einen von null verschiedenen Krümmungsradius aufweisen.

Bei bekannten Spülbecken dieser Art wird an jedem Eckbereich des Beckenflansches ein separat von einem Grundkörper des Spülbeckens hergestelltes Beckenflansch-Eckteil eingesetzt und durch Verschweißung mit den beiden an das Beckenflansch-Eckteil angrenzenden Beckenflanschabschnitten verbunden.

Dieses Einschweißen zusätzlicher Beckenflansch-Eckteile an den Grundkörper des Spülbeckens erhöht den Fertigungsaufwand des Spülbeckens und erfordert zusätzliche Schweißvorgänge.

Ferner entstehen bei der Herstellung der separaten Beckenflansch-Eckteile und beim Anpassen der Kontur der benachbarten Beckenflanschabschnitte an die Außenkontur der Beckenflansch-Eckteile schlecht nutzbare Materialabfälle.

Die WO 2007/031288 A1 offenbart ein Spülbecken gemäß dem Oberbegriff von Anspruch 1.

Die US 3 357 092 A offenbart eine aus einem flachen Blech durch Umform-und Schweißvorgänge gebildete Gussform für ein aus Plastik gegossenes Waschbecken, wobei bei der Gussform Beckenflanschabschnitte jeweils einen Beckenflansch-Eckabschnitt aufweisen und Beckenflansch-Eckabschnitte von zwei einander benachbarten Beckenflanschabschnitten mittels einer Schweißnaht miteinander verbunden sind und zusammen einen Beckenflansch-Eckbereich der Gussform bilden.

Der vorliegenden Erfindung liegt die Aufgabe zugrunde, ein Spülbecken der eingangs genannten Art zu schaffen, welches einfacher und mit geringerem Materialaufwand herstellbar ist.

Diese Aufgabe wird durch ein Spülbecken nach Anspruch 1 gelöst.

Dadurch, dass bei dem erfindungsgemäßen Spülbecken die Beckenflansch-Eckabschnitte einander benachbarter Beckenflanschabschnitte unmittelbar mittels der Schweißnaht miteinander verbunden sind, ist es nicht mehr erforderlich, zwischen die einander benachbarten Beckenflanschabschnitte ein separat von einem Grundkörper des Spülbeckens hergestelltes Beckenflansch-Eckteil einzusetzen, so dass das aufwändige Herstellen, Einpassen und Einschweißen eines solchen Beckenflansch-Eckteils entfällt, was die Herstellung des erfindungsgemäßen Spülbeckens deutlich vereinfacht und das für die Herstellung des Spülbeckens erforderliche Material reduziert.

Der gekrümmte Seitenwand-Eckbereich geht über einen gekrümmten Übergangsbereich in den Beckenflansch-Eckbereich über, wobei in dem Übergangsbereich zwischen einander gegenüberliegenden Rändern der Seitenwände eine Lücke gebildet ist, die durch mindestens eine Lasche zumindest teilweise geschlossen ist.

Diese Lücke entsteht insbesondere durch die Umformung von Seitenwand-Randbereich-Vorformen einer Spülbecken-Vorform, aus welcher das Spülbecken gebildet wird.

Bei einer bevorzugten Ausgestaltung der Erfindung ist vorgesehen, dass diese Lücke durch zwei Laschen zumindest teilweise geschlossen ist.

Dabei sind die zwei Laschen vorzugsweise einander benachbart angeordnet.

Insbesondere kann vorgesehen sein, dass die zwei Laschen aneinander anliegen.

Besonders günstig ist es, wenn die zwei Laschen durch eine Schweißnaht miteinander verbunden sind.

Ferner ist vorgesehen, dass die mindestens eine Lasche einstückig mit einem der Beckenflansch-Eckabschnitteverbunden ist.

Bei einer bevorzugten Ausgestaltung der Erfindung ist vorgesehen, dass das Spülbecken durch Umformvorgänge aus einer im Wesentlichen ebenen Spülbecken-Vorform gebildet ist.

Dabei umfasst die Spülbecken-Vorform vorzugsweise mindestens eine Laschen-Vorform, aus der durch Umformen eine Lasche gebildet wird, wobei diese Laschen-Vorform in der Spülbecken-Vorform insbesondere im Wesentlichen rechteckig ausgebildet sein kann.

Um die Beweglichkeit der Laschen-Vorform relativ zu einer benachbarten Seitenwand-Randbereich-Vorform, aus der durch Umformen ein gekrümmter Seitenwand-Randbereich des Spülbeckens gebildet wird, zu gewährleisten, ist vorzugsweise vorgesehen, dass in der Spülbecken-Vorform eine Laschen-Vorform, aus der durch Umformen eine Lasche gebildet wird, längs einer Trennlinie von einer Seitenwand-Randbereich-Vorform, aus der durch Umformen ein gekrümmter Seitenwand-Randbereich gebildet wird, getrennt ist.

Dabei kann in der Spülbecken-Vorform die Trennlinie im Wesentlichen parallel zu einem Rand der Seitenwand-Randbereich-Vorform verlaufen.

Ferner kann vorgesehen sein, dass in der Spülbecken-Vorform zwischen einer Beckenflansch-Eckabschnitt-Vorform, aus der ein Beckenflansch-Eckabschnitt gebildet wird, und der Seitenwand-Randbereich-Vorform ein Einschnitt vorgesehen ist.

Ein solcher Einschnitt kann insbesondere die Position vorgeben, an welcher durch Einreißen der Spülbecken-Vorform während der Umformvorgänge eine Lücke gebildet wird, welche durch mindestens eine Lasche zumindest teilweise geschlossen wird.

Bei einer besonderen Ausgestaltung der Erfindung ist dabei vorgesehen, dass in der Spülbecken-Vorform der Einschnitt von der Trennlinie, insbesondere von einem Ende der Trennlinie, ausgeht.

Ferner ist vorzugsweise vorgesehen, dass in der Spülbecken-Vorform der Einschnitt quer, insbesondere im Wesentlichen senkrecht, zu der Trennlinie verläuft.

Grundsätzlich können die Schweißnähte an dem erfindungsgemäßen Spülbecken mittels eines beliebigen Schweißverfahrens hergestellt sein.

Bei einer bevorzugten Ausgestaltung der Erfindung ist vorgesehen, dass die Beckenflansch-Eckabschnitte von zwei einander benachbarten Beckenflanschabschnitten, vorzugsweise unmittelbar, mittels einer Laserschweißnaht oder mittels einer Plasmaschweißnaht, insbesondere mittels einer Mikroplasmaschweißnaht, miteinander verbunden sind.

Bei einer bevorzugten Ausgestaltung der Erfindung ist ferner vorgesehen, dass das Spülbecken kein zwischen zwei Beckenflanschabschnitten angeordnetes separates Beckenflansch-Eckteil aufweist.

Der aus zwei Beckenflansch-Eckabschnitten gebildete Beckenflansch-Eckbereich des Beckenflansches weist vorzugsweise einen äußeren Rand auf, welcher einen äußeren Rand des Beckenflansches und einen äußeren Rand des Spülbeckens bildet.

Ferner weist der Beckenflansch-Eckbereich vorzugsweise eine Schweißnaht auf, welche längs einer Diagonalrichtung des Spülbeckens verläuft.

Eine solche Schweißnaht erstreckt sich vorzugsweise von dem gekrümmten Seitenwand-Eckbereich des Spülbeckens bis zum äußeren Rand des Beckenflansches, welcher einem Innenraum des Spülbeckens abgewandt ist.

Der Beckenflansch und die Beckenflanschabschnitte einschließlich der Beckenflansch-Eckabschnitte sind im montierten Zustand des Spülbeckens vorzugsweise im Wesentlichen horizontal ausgerichtet.

Die vorliegende Erfindung betrifft ferner ein Verfahren zum Herstellen eines Spülbeckens.

Der vorliegenden Erfindung liegt die weitere Aufgabe zugrunde, ein Verfahren zum Herstellen eines Spülbeckens zu schaffen, welches einfach durchführbar ist und einen geringen Materialbedarf aufweist.

Diese Aufgabe wird durch ein Verfahren zum Herstellen eines Spülbeckens nach Anspruch 13 gelöst.

Das erfindungsgemäße Verfahren eignet sich insbesondere zur Herstellung eines erfindungsgemäßen Spülbeckens der vorstehend beschriebenen Art.

Bei dem erfindungsgemäßen Verfahren können die vorstehend genannten Verfahrensschritte in der angegebenen Reihenfolge oder in einer beliebig geänderten anderen Reihenfolge durchgeführt werden.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Spüle mit einer Bodenwand, Seitenwänden und einem Beckenflansch;
- Fig. 2: eine vergrößerte Darstellung des Bereichs I aus Fig. 1, mit der Blickrichtung auf eine Oberseite des Beckenflansch-Eckbereichs;
- Fig. 3: eine schematische perspektivische Darstellung des Beckenflansch-Eckbereichs aus Fig. 2, mit der Blickrichtung auf die Unterseite des Beckenflansch-Eckbereichs;
- Fig. 4: eine Draufsicht auf eine Spülbecken-Vorform, aus welcher durch Umformvorgänge das in Fig. 1 dargestellte Spülbecken herstellbar ist;
- Fig. 5: eine vergrößerte Darstellung des Bereichs II aus Fig. 4;
- Fig. 6: eine vergrößerte Darstellung des Bereichs III aus Fig. 4;
- Fig. 7: eine Draufsicht auf eine Spülbecken-Vorform, aus welcher durch Umformvorgänge ein Grundkörper eines Spülbeckens nach dem Stand der Technik herstellbar ist;
- Fig. 8: eine vergrößerte Darstellung des Bereichs IV aus Fig. 7;
- Fig. 9: eine vergrößerte Darstellung des Bereichs V aus Fig. 7;
- Fig. 10: eine Draufsicht von oben auf einen Eckbereich des Spülbeckens nach dem Stand der Technik, nachdem gekrümmte SeitenwandRandbereiche des Spülbeckens mittels einer Schweißnaht miteinander verbunden worden sind, um zusammen einen gekrümmten Seitenwand-Eckbereich des Spülbeckens zu bilden; und
- Fig. 11: eine Draufsicht auf den Eckbereich des Spülbeckens nach dem Stand der Technik aus Fig. 10, nachdem eine komplementär zur Außenkontur eines separaten Beckenflansch-Eckteils verlaufende Außenkontur freigestanzt worden ist und das separat hergestellte Beckenflansch-Eckteil passgenau an diese komplementäre Außenkontur angesetzt und mit den benachbarten Beckenflanschabschnitten verschweißt worden ist.

Gleiche oder funktional äquivalente Elemente sind in allen Figuren mit denselben Bezugszeichen bezeichnet.

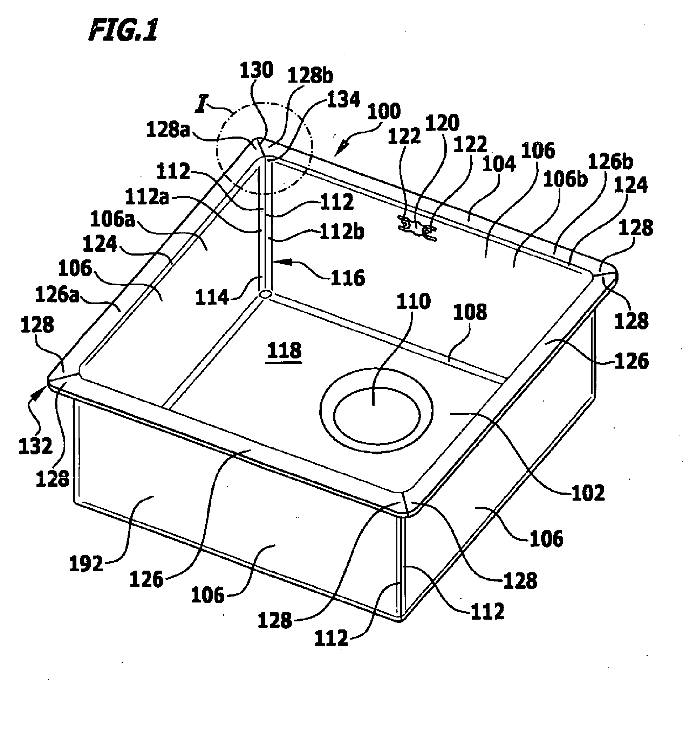

Ein in den Fig. 1 bis 3 dargestelltes, als Ganzes mit 100 bezeichnetes Spülbecken, das beispielsweise in der Draufsicht im Wesentlichen rechteckig, insbesondere im Wesentlichen quadratisch, ausgebildet sein kann, umfasst eine Bodenwand 102, einen um einen oberen Rand des Spülbeckens 100 umlaufenden Beckenflansch 104 und mehrere, beispielsweise vier, den Beckenflansch 104 mit der Bodenwand 102 verbindende Seitenwände 106.

Jede der Seitenwände 106 ist über einen gekrümmten Bodenwand-Seitenwand-Übergangsbereich 108 einstückig mit der Bodenwand 102 verbunden.

Die Bodenwand 102 weist eine Ablauföffnung 110 auf.

Jede Seitenwand 106 weist jeweils zwei gekrümmte Seitenwand-Randbereiche 112 auf, die im (in Fig. 1 dargestellten) montierten Zustand des Spülbeckens 100 im Wesentlichen vertikal ausgerichtet sind.

Seitenwand-Randbereiche 112 von jeweils zwei einander benachbarten Seitenwänden 106a und 106b sind mittels einer Schweißnaht 114 miteinander verbunden und bilden zusammen einen gekrümmten Seitenwand-Eckbereich 116 des Spülbeckens 100.

Die Krümmung jedes der mehreren, beispielsweise vier, Seitenwand-Eckbereiche 116 ist - von einem Innenraum 118 des Spülbeckens 100 aus gesehen - konkav.

Der Krümmungsradius des Seitenwand-Eckbereichs 116 beträgt vorzugsweise mindestens ungefähr 0,5 cm, insbesondere mindestens ungefähr 0,8 cm.

Ferner beträgt der Krümmungsradius des Seitenwand-Eckbereichs 116 vorzugsweise weniger als ungefähr 2 cm, insbesondere weniger als ungefähr 1,5 cm.

Eine der Seitenwände 106 kann mit einer Überlauföffnung 120 versehen sein.

Am Rand der Überlauföffnung 120 können eine oder mehrere Befestigungslaschen 122 für die Befestigung eines (nicht dargestellten) Rahmens einer Überlaufanordnung des Spülbeckens 100 angeordnet sein.

Jede der Seitenwände 106 ist an ihrem oberen Rand über einen gekrümmten Seitenwand-Beckenflansch-Übergangsbereich 124 mit jeweils einem Befestigungsflanschabschnitt 126 einstückig verbunden.

Im montierten Zustand des Spülbeckens 100 sind die Befestigungsflanschabschnitte 126 vorzugsweise im Wesentlichen horizontal und/oder im Wesentlichen parallel zur Bodenwand 102 ausgerichtet.

Jeder Beckenflanschabschnitt 126 umfasst jeweils zwei Beckenflansch-Eckabschnitte 128, die an einander gegenüberliegenden Endbereichen des jeweiligen Beckenflanschabschnittes 126 angeordnet sind.

Jeweils zwei Beckenflansch-Eckabschnitte 128a und 128b von zwei einander benachbarten Beckenflanschabschnitten 126a beziehungsweise 126b sind mittels einer Schweißnaht 130 miteinander verbunden und bilden zusammen einen Beckenflansch-Eckbereich 132 des Beckenflansches 104.

Jeder der mehreren, beispielsweise vier, Beckenflansch-Eckbereiche 132 des Spülbeckens 100 ist vorzugsweise im Wesentlichen horizontal und/oder im Wesentlichen parallel zur Bodenwand 102 ausgerichtet und geht über einen gekrümmten Übergangsbereich 134 in den jeweils zugeordneten Seitenwand-Eckbereich 116 des Spülbeckens 100 über.

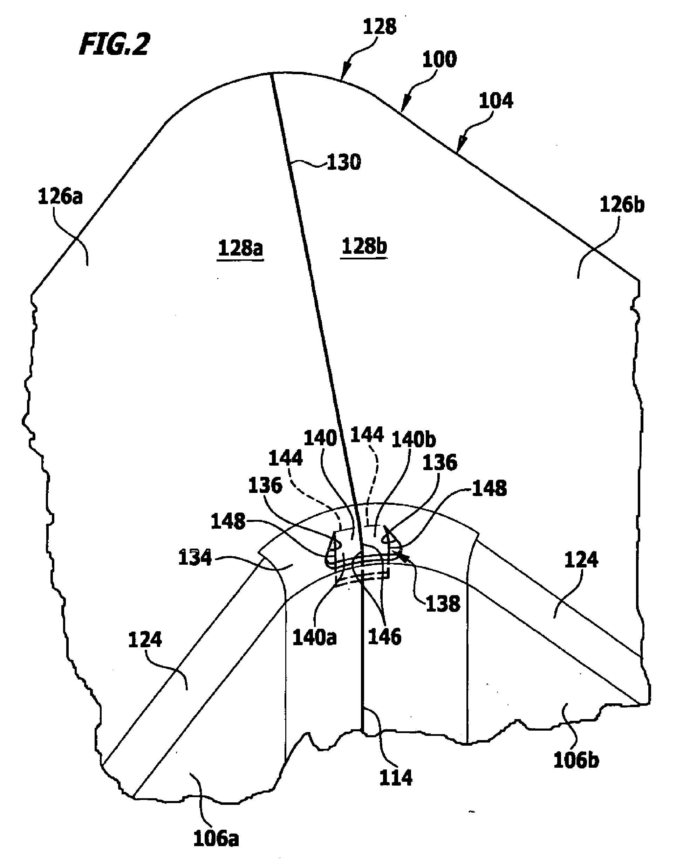

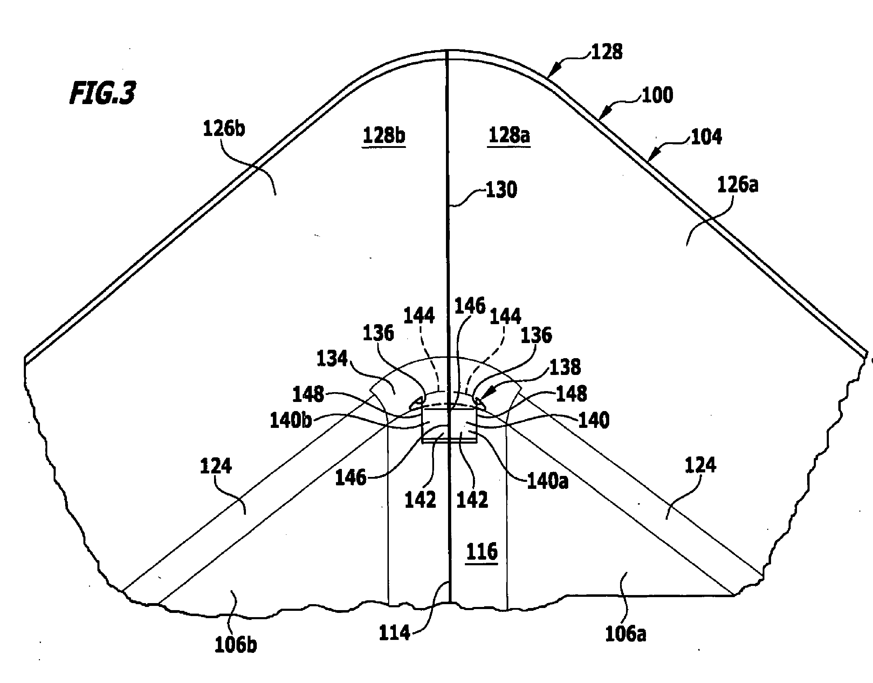

Wie am besten aus den Fig. 2 und 3 zu ersehen ist, ist in dem Übergangsbereich 134 zwischen einander gegenüberliegenden Rändern 136 der einander benachbarten Seitenwände 106a und 106b eine Öffnung oder Lücke 138 gebildet.

Diese Lücke 138 ist durch zwei Laschen 140 zumindest teilweise geschlossen.

Wie am besten aus Fig. 3 zu ersehen ist, liegt ein freier Endabschnitt 142 jeder Lasche 140 an einer dem Innenraum 118 des Spülbeckens 100 abgewandten Außenseite des gekrümmten Seitenwand-Eckbereichs 116 an.

Die in Fig. 2 links dargestellte Lasche 140a ist über eine Biegelinie 144 einstückig mit dem Beckenflansch-Eckabschnitt 128a des Beckenflanschabschnitts 126a verbunden, welcher seinerseits einstückig mit der in Fig. 2 links dargestellten Seitenwand 106a verbunden ist.

Die in Fig. 2 rechts dargestellte Lasche 140b ist über eine Biegelinie 144 einstückig mit dem Beckenflansch-Eckabschnitt 128b des Beckenflanschabschnitts 126b verbunden, welcher seinerseits einstückig mit der in Fig. 2 rechts dargestellten Seitenwand 106b verbunden ist.

Beide Laschen 140a und 140b liegen im montierten Zustand des Spülbeckens 100 mit jeweils einer Längsseite 146 über einen Endabschnitt der Schweißnaht 130 aneinander an.

Der Abstand zwischen den den Längsseiten 146 der Laschen 140 gegenüberliegenden Längsseiten 148 der Laschen 140 einerseits und den Rändern 136 der Seitenwände 106 andererseits ist in den Fig. 2 und 3 zur Verdeutlichung übertrieben groß dargestellt.

Am fertigen Spülbecken 100 ist dieser Zwischenraum durch Verschweißen, insbesondere durch Laserschweißen oder Plasmaschweißen, beispielsweise Mikroplasmaschweißen, geschlossen.

Ferner ist vorzugsweise am fertigen Spülbecken 100 der Übergangsbereich 134 zumindest auf seiner dem Innenraum 118 des Spülbeckens 100 zugewandten Innenseite durch Abschleifen und/oder Polieren der Oberfläche so bearbeitet, dass der Übergangsbereich 134 im Wesentlichen homogen erscheint und keine Trennlinien zwischen den Laschen 140 oder zwischen den Laschen 140 und den angrenzenden Bereichen der Seitenwände 106 sichtbar sind.

Das Spülbecken 100 ist vorzugsweise aus einem metallischen Blechmaterial, insbesondere aus einem Edelstahlmaterial, vorzugsweise aus einem Chrom-Nickel-Stahlmaterial, beispielsweise aus dem Stahl mit der Werkstoffnummer 1.4301 (gemäß DIN EN 10088), gebildet.

Die Materialstärke des blechförmigen Ausgangsmaterials beträgt vorzugsweise mindestens ungefähr 0,5 mm, insbesondere mindestens ungefähr 1 mm.

Ferner beträgt die Materialstärke des Ausgangsmaterials vorzugsweise höchstens ungefähr 2 mm, vorzugsweise höchstens ungefähr 1,5 mm.

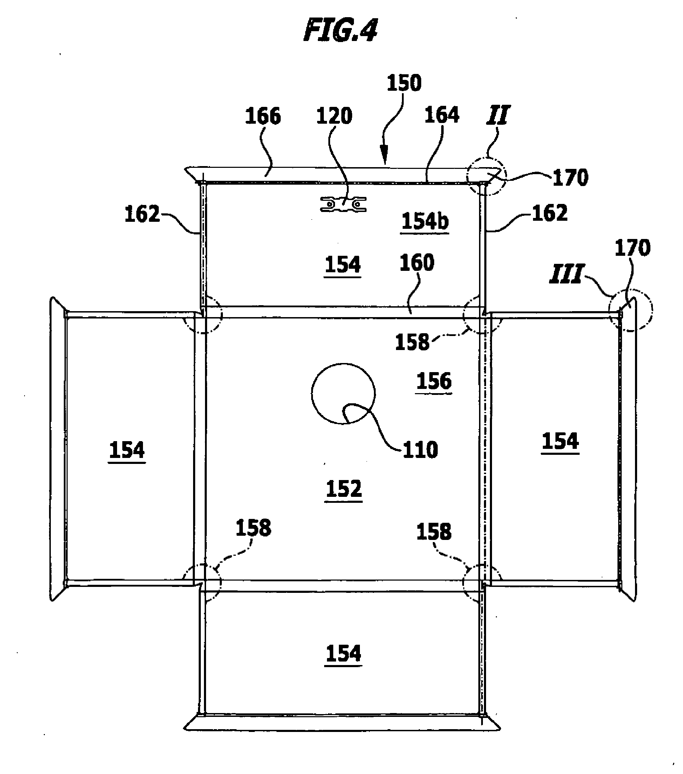

Zur Herstellung des Spülbeckens 100 aus dem Ausgangsmaterial wird wie folgt vorgegangen:
Zunächst wird aus dem Ausgangsmaterial die in Fig. 4 dargestellte Spülbecken-Vorform 150 herausgetrennt.

Dieses Heraustrennen der Spülbecken-Vorform 150 kann beispielsweise mittels Laserschneidens oder Laserstanzens oder mittels mechanischen Stanzens erfolgen.

Die Spülbecken-Vorform 150 umfasst eine mittige Bodenwand-Vorform 152, die von vier Seitenwand-Vorformen 154 umgeben ist, welche von der Bodenwand-Vorform 152 kreuzförmig nach außen abstehen.

Die im fertig montierten Spülbecken 100 dem Innenraum 118 des Spülbeckens 100 zugewandten Innenseiten der Bodenwand-Vorform 152 und der Seitenwand-Vorformen 154 können während des Heraustrennvorgangs und/oder während der anschließenden Umformvorgänge durch eine Schutzfolie 156 abgedeckt sein, deren Außenkontur 158 in Fig. 4 durch eine strichpunktierte Linie angedeutet ist.

Die Schutzfolie 156 dient dazu, das Entstehen von Kratzern an der Sichtseite des Spülbeckens 100 während des Heraustrennens und/oder während der anschließenden Umformvorgänge zu vermeiden.

Eine solche Schutzfolie 156 kann beispielsweise aus einem Kunststoffmaterial bestehen und ist vorzugsweise an ihrer dem Ausgangsmaterial des Spülbeckens 100 zugewandten Seite mit einer Haftschicht aus einem geeigneten Klebematerial versehen, um eine ausreichende Haftung an dem Ausgangsmaterial zu erzielen.

Die Ablauföffnung 110 in der Bodenwand-Vorform 152 und/oder die Überlauföffnung 120 in der Seitenwand-Vorform 154b können zeitgleich mit dem Heraustrennen der Spülbecken-Vorform 150 aus dem Ausgangsmaterial, vor dem Heraustrennen der Spülbecken-Vorform 150 oder nach dem Heraustrennen der Spülbecken-Vorform 150 erzeugt werden.

Jede der Seitenwand-Vorformen 154 umfasst eine sich parallel zu einem Rand der Bodenwand-Vorform 152 erstreckende Bodenwand-Seitenwand-Übergangsbereich-Vorform 160, zwei sich gegenüberliegende Seitenwand-Randbereich-Vorformen 162, eine der Bodenwand-Seitenwand-Übergangsbereich-Vorform 160 gegenüberliegende und parallel zu derselben verlaufende Seitenwand-Beckenflansch-Übergangsbereich-Vorform 164 und eine sich an die Seitenwand-Befestigungsflansch-Übergangsbereich-Vorform 164 anschließende Beckenflanschabschnitt-Vorform 166.

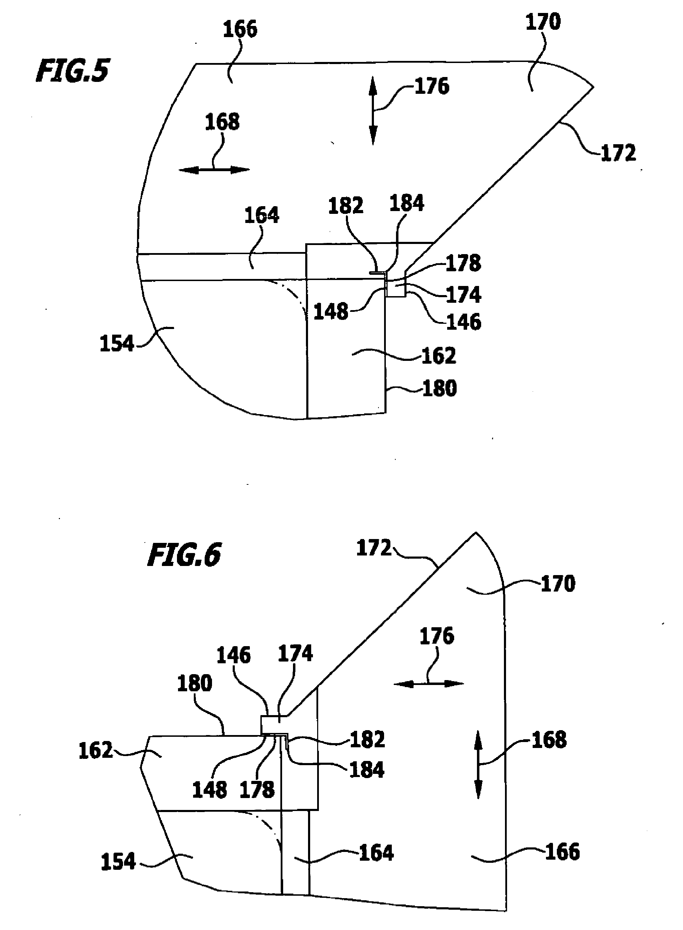

Wie am besten aus den Fig. 5 und 6 zu ersehen ist, umfasst jede Beckenflanschabschnitt-Vorform 166, die sich in einer zu einem Rand der Bodenwand parallelen Längsrichtung 168 erstreckt, an ihren beiden gegenüberliegenden Enden jeweils eine Beckenflansch-Eckabschnitt-Vorform 170, die an einem Rand 172 endet, welcher unter einem Winkel von 45° zur Längsrichtung 168 der Beckenflanschabschnitt-Vorform 166 verläuft.

Der Rand 172 der Beckenflansch-Eckabschnitt-Vorform 170 endet an einer Laschen-Vorform 174, welche in der Draufsicht vorzugsweise im Wesentlichen rechteckig ausgebildet ist.

Die Längsseiten 146 und 148 der Laschen-Vorform 174, welche den Längsseiten der aus der Laschen-Vorform 174 gebildeten Lasche 140 entsprechen, verlaufen in der Spülbecken-Vorform 150 im Wesentlichen parallel zu einer Querrichtung 176 der Beckenflansch-Vorform 166, welche ihrerseits senkrecht zur Längsrichtung 168 der Beckenflanschabschnitt-Vorform 166 ausgerichtet ist.

Die Laschen-Vorform 174 ist längs eines Spaltes oder einer Trennlinie 178 von der benachbarten Seitenwand-Randbereich-Vorform 162 getrennt, wodurch eine Beweglichkeit der Laschen-Vorform 174 relativ zu der Seitenwand-Randbereich-Vorform 162 während der Umformvorgänge an der Spülbecken-Vorform 150 gegeben ist.

Diese Trennlinie 178 verläuft vorzugsweise im Wesentlichen parallel zur Querrichtung 176 der Beckenflansch-Abschnitt-Vorform 166 und im Wesentlichen parallel zu einem freien Rand 180 der Seitenwand-Randbereich-Vorform 162.

Zwischen der Seitenwand-Randbereich-Vorform 162 und der Beckenflansch-Eckabschnitt-Vorform 170 ist ein Einschnitt 182 vorgesehen, welcher quer, vorzugsweise im Wesentlichen senkrecht, zu der Trennlinie 178 verläuft.

Insbesondere kann vorgesehen sein, dass der Einschnitt 182 von einem Endpunkt 184 der Trennlinie 178 ausgeht.

Bei dem im nachfolgenden beschriebenen Umformvorgang an der Spülbecken-Vorform 150 beginnt die Seitenwand-Vorform 154 im Bereich des Einschnittes 182 einzureißen, wodurch die Lücke 138 im Übergangsbereich 134 an einer durch die Position des Einschnitts 182 vorgegebenen Stelle erzeugt wird.

Aus der vorstehend beschriebenen Spülbecken-Vorform 150 wird ein einstückiger Grundkörper 192 des Spülbeckens 100 durch Umform-und Schweißvorgänge wie folgt hergestellt:
Die Seitenwand-Beckenflansch-Übergangsbereich-Vorformen 164 werden um einen Winkel von ungefähr 90° umgebogen, um die beim fertigen Spülbecken 100 horizontal ausgerichteten Beckenflanschabschnitte 126 und die - von dem Innenraum 118 des Spülbeckens 100 aus gesehen - konvex gekrümmten Seitenwand-Beckenflansch-Übergangsbereiche 124 zu bilden.

Die Seitenwand-Randbereich-Vorformen 162 werden um einen Winkel von jeweils ungefähr 45° umgebogen, um die beim fertig montierten Spülbecken 100 - vom Innenraum 118 des Spülbeckens 100 aus gesehen - konkav gekrümmten Seitenwand-Randbereiche 112 zu bilden.

Die Bodenwand-Seitenwand-Übergangsbereich-Vorformen 160 werden um einen Winkel von jeweils ungefähr 90° umgebogen, um die im montierten Zustand des Spülbeckens 100 im Wesentlichen vertikal ausgerichteten Seitenwände 106, die im montierten Zustand des Spülbeckens 100 im Wesentlichen horizontal ausgerichtete Bodenwand 102 und die im montierten Zustand des Spülbeckens 100 - vom Innenraum 118 des Spülbeckens 100 aus gesehen - konkav gekrümmten Bodenwand-Seitenwand-Übergangsbereiche 108 zu bilden.

Nach diesen Umformvorgängen, welche beispielsweise mittels geeigneter Umformstempel und Gegenhalter durchgeführt werden, kann die Schutzfolie 156 entfernt werden.

Die bei der Umformung der Seitenwand-Randbereich-Vorformen 162 entstandenen Lücken 138 in den Übergangsbereichen 134 werden zumindest teilweise geschlossen, in dem die Laschen-Vorformen 174 von außen gegen die gekrümmten Seitenwand-Randbereiche 112 gedrückt werden.

Nach den vorstehend beschriebenen Umformvorgängen liegen jeweils zwei Seitenwand-Randbereiche 112 zweier benachbarter Seitenwände 106 aneinander an, um einen gekrümmten Seitenwand-Eckbereich 116 zu bilden. Ferner liegen jeweils zwei Beckenflansch-Eckabschnitte 128 von zwei einander benachbarten Beckenflanschabschnitten 126 längs ihrer Ränder 172 aneinander an, um jeweils einen Beckenflansch-Eckbereich 132 zu bilden.

Außerdem liegen die Laschen 140, welche die Lücken 138 zumindest teilweise überdecken, paarweise entlang ihrer Längsseiten 146 aneinander an.

Nun werden jeweils zwei einander benachbarte gekrümmte Seitenwand-Randbereiche 112 durch Verschweißen unter Bildung der Schweißnaht 114 stoffschlüssig miteinander verbunden.

Ebenso werden jeweils zwei einander benachbarte Beckenflansch-Eckabschnitte 128 und Laschen 140 durch Verschweißen unter Bildung der Schweißnaht 130 stoffschlüssig miteinander verbunden.

Ferner werden die einander abgewandten Längsseiten 148 der Laschen 140 mit dem jeweils benachbarten Rand 136 einer Seitenwand 106 durch Verschweißen stoffschlüssig miteinander verbunden.

Die Verschweißung kann grundsätzlich mittels jedes geeigneten Schweißverfahrens durchgeführt werden.

Beispielsweise kann das Verschweißen durch Laserschweißen oder durch Plasmaschweißen, insbesondere durch Mikroplasmaschweißen, durchgeführt werden.

Im Anschluss an die Schweißvorgänge wird im Bereich der Schweißnähte 114 und 130 eine Oberflächenbehandlung, insbesondere ein Abschleifen und/oder Polieren, durchgeführt, um im Bereich der Schweißnähte 114 und 130 eine möglichst homogene und glatte Oberfläche, zumindest an der dem Innenraum 118 zugewandten Innenseite des Spülbeckens 100, zu erhalten.

Damit ist die Herstellung des Spülbeckens 100 abgeschlossen.

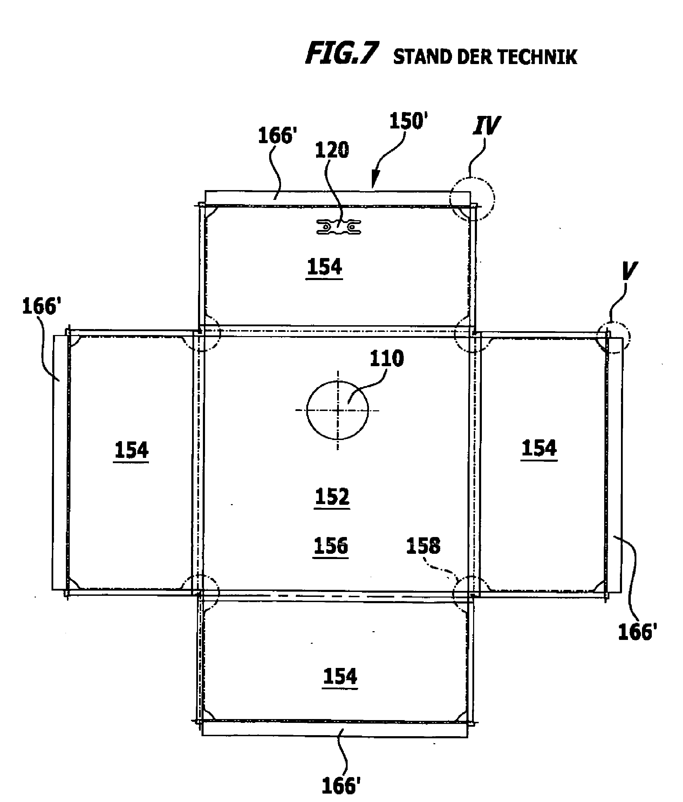

Es ist somit nicht erforderlich, einen weiteren Arbeitsvorgang zum Einsetzen separat hergestellter Beckenflansch-Eckteile 186 durchzuführen, wie dies bei der Herstellung des in den Fig. 7 bis 11 dargestellten Spülbeckens 100' nach dem Stand der Technik notwendig ist.

Auch der Grundkörper 192' dieses Spülbeckens 100' nach dem Stand der Technik wird aus einer im Wesentlichen ebenen Spülbecken-Vorform 150' hergestellt, welche in den Fig. 7 bis 9 dargestellt ist.

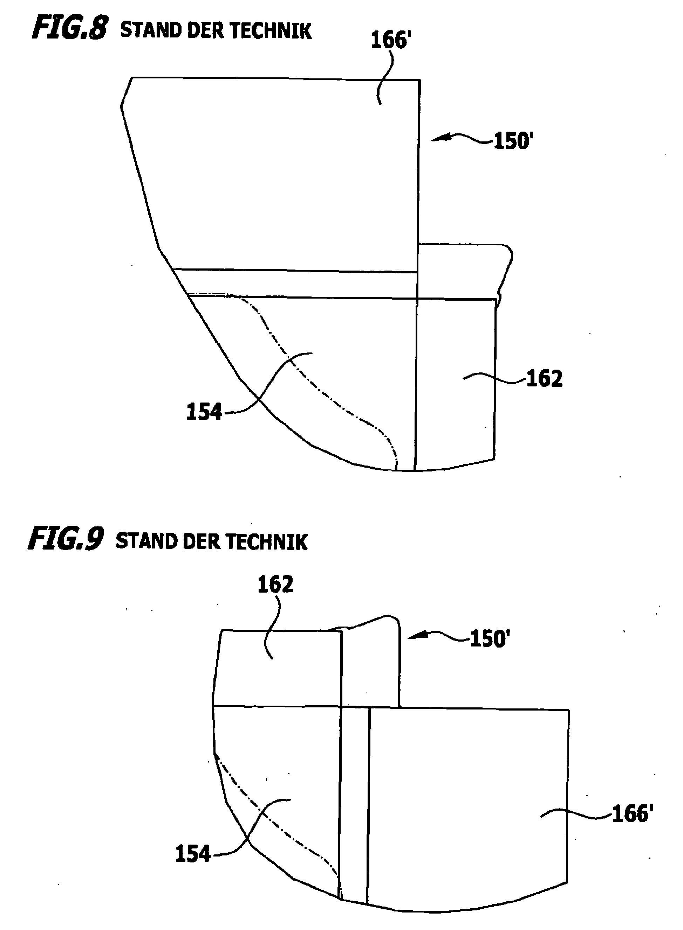

Wie am besten aus den Fig. 8 und 9 zu ersehen ist, weisen bei dieser Spülbecken-Vorform 150' die Beckenflanschabschnitt-Vorformen 166' jedoch keinen Beckenflansch-Eckabschnitt 128 auf.

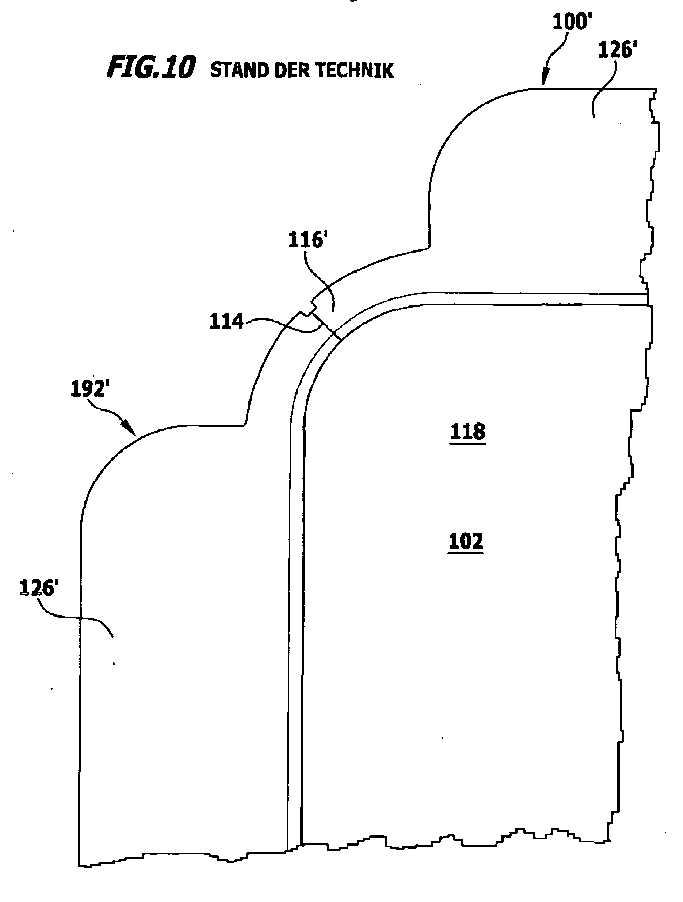

Nach Durchführung der vorstehend beschriebenen Umformvorgänge an der Spülbecken-Vorform 150' entsteht daher ein Grundkörper 192' des Spülbeckens 100', bei dem der Beckenflansch-Eckbereich 132 fehlt, wie dies aus Fig. 10 zu ersehen ist.

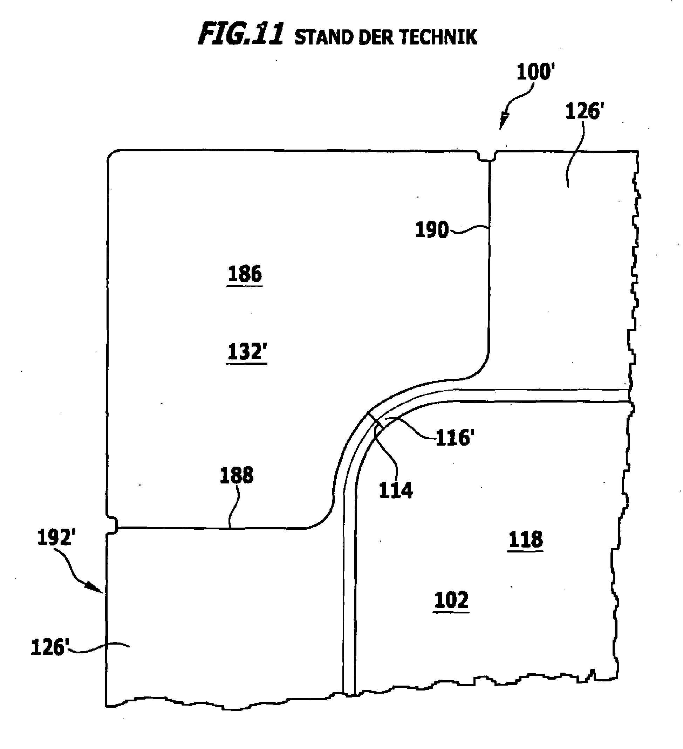

Stattdessen ist ein Beckenflansch-Eckbereich 132' bei dieser Ausführungsform nach dem Stand der Technik an einem separat von der Spülbecken-Vorform 150' hergestellten, im Wesentlichen ebenen Beckenflansch-Eckteil 186 mit der aus Fig. 11 ersichtlichen Außenkontur vorgesehen.

Um dieses separate Beckenflansch-Eckteil 186 mit den Beckenflanschabschnitten 126' und mit dem Seitenwand-Eckbereich 116' zu verbinden, werden die Endbereiche der Beckenflanschabschnitte 126' und des Seitenwand-Eckbereichs 116' längs einer der Außenkontur des Beckenflansch-Eckteils 186 entsprechenden Stanzlinie 188 (siehe Fig. 11) ausgestanzt.

Anschließend wird das Beckenflansch-Eckteil 186 passgenau an die Beckenflanschabschnitte 126' und an den Seitenwand-Eckbereich 116 angesetzt und durch Verschweißung unter Bildung einer Schweißnaht 190 stoffschlüssig mit den Beckenflanschabschnitten 126' und mit dem Seitenwand-Eckbereich 116' verbunden.

Bei der Herstellung des in den Fig. 1 bis 6 dargestellten Spülbeckens 100 wird hingegen kein separates Beckenflansch-Eckteil 186 zwischen zwei Beckenflansch-Abschnitten 126 angeordnet, wodurch der zusätzliche Aufwand für die Herstellung von solchen separaten Beckenflansch-Eckteilen 186 entfällt und ferner auch kein zusätzlicher Schweißvorgang zum stoffschlüssigen Verbinden der Beckenflansch-Eckteile 186 mit dem aus der Spülbecken-Vorform 150 gebildeten Grundkörper 192 des Spülbeckens 100 erforderlich ist.

Vielmehr kann bei dem Spülbecken 100 der gesamte Grundkörper 192 des Spülbeckens 100 einschließlich des vollständigen Beckenflansches 104 einstückig ausgebildet sein.

## Patentansprüche

1. Spülbecken, umfassend
eine Bodenwand (102),
einen Beckenflansch (104) und
mehrere den Beckenflansch (104) mit der Bodenwand (102) verbindende Seitenwände (106), die jeweils mindestens einen gekrümmten Seitenwand-Randbereich (112) aufweisen,
wobei Seitenwand-Randbereiche (112) von zwei einander benachbarten Seitenwänden (106) mittels einer Schweißnaht (114) miteinander verbunden sind und zusammen einen gekrümmten Seitenwand-Eckbereich (116) des Spülbeckens (100) bilden, und
wobei jede Seitenwand (106) einstückig mit einem Beckenflanschabschnitt (126) verbunden ist,
**dadurch gekennzeichnet,**
**dass** die Beckenflanschabschnitte (126) jeweils einen Beckenflansch-Eckabschnitt (128) aufweisen, wobei Beckenflansch-Eckabschnitte (128) von zwei einander benachbarten Beckenflanschabschnitten (126) mittels einer Schweißnaht (130) miteinander verbunden sind und zusammen einen Beckenflansch-Eckbereich (132) des Beckenflansches (104) bilden,
wobei der gekrümmte Seitenwand-Eckbereich (116) über einen gekrümmten Übergangsbereich (134) in den Beckenflansch-Eckbereich (132) übergeht und
wobei in dem Übergangsbereich (134) zwischen einander gegenüberliegenden Rändern (136) der Seitenwände (106) eine Lücke (138) gebildet ist, die durch mindestens eine Lasche (140) zumindest teilweise geschlossen ist, wobei die mindestens eine Lasche (140) einstückig mit einem Beckenflansch-Eckabschnitt (128) verbunden ist.

2. Spülbecken nach Anspruch 1, **dadurch gekennzeichnet, dass** die Lücke (138) durch zwei Laschen (140) zumindest teilweise geschlossen ist.

3. Spülbecken nach Anspruch 2, **dadurch gekennzeichnet, dass** die zwei Laschen (140) durch eine Schweißnaht (130) miteinander verbunden sind.

4. Spülbecken nach einem der Ansprüche 1 bis 3, **dadurch gekennzeichnet, dass** das Spülbecken (100) durch Umformvorgänge aus einer im Wesentlichen ebenen Spülbecken-Vorform (150) gebildet ist.

5. Spülbecken nach Anspruch 4, **dadurch gekennzeichnet, dass** in der Spülbecken-Vorform (150) eine Laschen-Vorform (174), aus der durch Umformen eine Lasche (140) gebildet wird, im Wesentlichen rechteckig ausgebildet ist.

6. Spülbecken nach einem der Ansprüche 4 oder 5, **dadurch gekennzeichnet, dass** in der Spülbecken-Vorform (150) eine Laschen-Vorform (174), aus der durch Umformen eine Lasche (140) gebildet wird, längs einer Trennlinie (178) von einer Seitenwand-Randbereich-Vorform (162), aus der durch Umformen ein gekrümmter Seitenwand-Randbereich (112) gebildet wird, getrennt ist.

7. Spülbecken nach Anspruch 6, **dadurch gekennzeichnet, dass** in der Spülbecken-Vorform (150) die Trennlinie (178) im Wesentlichen parallel zu einem Rand (180) der Seitenwand-Randbereich-Vorform (162) verläuft.

8. Spülbecken nach einem der Ansprüche 6 oder 7, **dadurch gekennzeichnet, dass** in der Spülbecken-Vorform (150) zwischen einer Beckenflansch-Eckabschnitt-Vorform (170), aus der ein Beckenflansch-Eckabschnitt (128) gebildet wird, und der Seitenwand-Randbereich-Vorform (162) ein Einschnitt (182) vorgesehen ist.

9. Spülbecken nach Anspruch 8, **dadurch gekennzeichnet, dass** in der Spülbecken-Vorform (150) der Einschnitt (182) von der Trennlinie (178) ausgeht.

10. Spülbecken nach einem der Ansprüche 8 oder 9, **dadurch gekennzeichnet, dass** in der Spülbecken-Vorform (150) der Einschnitt (182) quer zu der Trennlinie (178) verläuft.

11. Spülbecken nach einem der Ansprüche 1 bis 10, **dadurch gekennzeichnet, dass** die Beckenflansch-Eckabschnitte (128) von zwei einander benachbarten Beckenflanschabschnitten (126) mittels einer Laserschweißnaht oder mittels einer Plasmaschweißnaht miteinander verbunden sind.

12. Spülbecken nach einem der Ansprüche 1 bis 11, **dadurch gekennzeichnet, dass** das Spülbecken (100) kein zwischen zwei Beckenflanschabschnitten (126) angeordnetes separates Beckenflansch-Eckteit (186) aufweist.

13. Verfahren um Herstellen eines Spülbeckens (100), umfassend Folgendes:
- Heraustrennen einer Spülbecken-Vorform (150) aus einem Ausgangsmaterial, wobei die Spülbecken-Vorform (150) eine Bodenwand-Vorform (152) und mehrere Seitenwand-Vorformen (154) umfasst, wobei jede Seitenwand-Vorform (154) mindestens eine Seitenwand-Randbereich-Vorform (162) aufweist und einstückig mit einer Beckenflanschabschnitt-Vorform (166) verbunden ist und wobei jede Beckenflanschabschnitt-Vorform (166) mindestens eine Beckenflansch-Eckabschnitt-Vorform (170) umfasst;
- Bilden von Beckenflanschabschnitten (126) aus den Beckenflanschabschnitt-Vorformen (166) durch Umformen;
- Bilden von gekrümmten Seitenwand-Randbereichen (112) aus den Seitenwand-Randbereich-Vorformen (162) durch Umformen;
- Bilden von Seitenwänden (106) aus den Seitenwand-Vorformen (154) durch Umformen;
- Verbinden von Seitenwand-Randbereichen (112) von jeweils zwei einander benachbarten Seitenwänden (106) mittels Verschweißen zur Bildung von gekrümmten Seitenwand-Eckbereichen (116) des Spülbeckens (100);
- Verbinden von Beckenflansch-Eckabschnitten (128) von jeweils zwei einander benachbarten Beckenflanschabschnitten (126) mittels Verschweißen zur Bildung von Beckenflansch-Eckbereichen (132);
wobei der gekrümmte Seitenwand-Eckbereich (116) über einen gekrümmten Übergangsbereich (134) in den Beckenflansch-Eckbereich (132) übergeht und
wobei in dem Übergangsbereich (134) zwischen einander gegenüberliegenden Rändern (136) der Seitenwände (106) eine Lücke (138) gebildet ist, die durch mindestens eine Lasche (140) zumindest teilweise geschlossen ist, wobei die mindestens eine Lasche (140) einstückig mit einem Beckenflansch-Eckabschnitt (128) verbunden ist.

## Claims

1. Sink bowl comprising
a bottom wall (102),
a bowl flange (104) and
a plurality of side walls (106) which connect the bowl flange (104) to the bottom wall (102) and each of which comprises at least one curved side wall edge region (112),
wherein side wall edge regions (112) of two mutually adjacent side walls (106) are connected to one another by means of a welding seam (114) and together form a curved side wall corner region (116) of the sink bowl (100), and
wherein each side wall (106) is connected in one piece manner to a bowl flange section (126),
**characterized in that**
the bowl flange sections (126) each comprise a bowl flange corner section (128), wherein bowl flange corner sections (128) of two mutually adjacent bowl flange sections (126) are connected to each other by means of a welding seam (130) and together form a bowl flange corner-region (132) of the bowl flange (104),
wherein the curved side wall corner region (116) merges via a curved transition region (134) into the bowl flange corner-region (132) and wherein a gap (138) is formed in the transition region (134) between mutually opposite edges (136) of the side walls (106) and this gap is at least partially closed by at least one tab (140), wherein the at least one tab (140) is connected in one piece manner to a bowl flange corner section (128).

2. A sink bowl in accordance with Claim 1, **characterized in that** the gap (138) is at least partially closed by two tabs (140).

3. A sink bowl in accordance with Claim 2, **characterized in that** the two tabs (140) are connected to one another by a welding seam (130).

4. A sink bowl in accordance with any of the Claims 1 to 3, **characterized in that** the sink bowl (100) is formed by shaping processes from a substantially flat sink bowl pre-form (150).

5. A sink bowl in accordance with Claim 4, **characterized in that**, in the sink bowl pre-form (150), a tab pre-form (174) from which a tab (140) is formed by means of a shaping process is substantially in the form of a rectangle.

6. A sink bowl in accordance with either of Claims 4 or 5, **characterized in that**, in the sink bowl pre-form (150), a tab pre-form (174) from which a tab (140) is formed by means of a shaping process is separated along a dividing line (178) from a side wall edge region pre-form (162) from which a curved side wall edge region (112) is formed by means of a shaping process.

7. A sink bowl in accordance with Claim 6, **characterized in that**, in the sink bowl pre-form (150), the dividing line (178) runs substantially parallel to an edge (180) of the side wall edge region pre-form (162).

8. A sink bowl in accordance with either of Claims 6 or 7, **characterized in that**, in the sink bowl pre-form (150), a notch (182) is provided between a bowl flange corner section pre-form (170) from which a bowl flange corner section (128) is formed and the side wall edge region pre-form (162).

9. A sink bowl in accordance with Claim 8, **characterized in that**, in the sink bowl pre-form (150), the notch (182) originates from the dividing line (178).

10. A sink bowl in accordance with either of Claims 8 or 9, **characterized in that**, in the sink bowl pre-form (150), the notch (182) runs transversely to the dividing line (178).

11. A sink bowl in accordance with any of the Claims 1 to 10, **characterized in that** the bowl flange corner sections (128) of two mutually adjacent bowl flange sections (126) are connected to each other by means of a laser welding seam or by means of a plasma welding seam.

12. A sink bowl in accordance with any of the Claims 1 to 11, **characterized in that** the sink bowl (100) does not comprise a separate bowl flange corner part (186) arranged between two bowl flange sections (126).

13. Method of manufacturing a sink bowl (100), comprising the following:
- separating out a sink bowl pre-form (150) from a raw material,
wherein the sink bowl pre-form (150) comprises a bottom wall pre-form (152) and a plurality of side wall pre-forms (154), wherein each side wall pre-form (154) comprises at least one side wall edge region pre-form (162) and is connected in one piece manner to a bowl flange section pre-form (166) and wherein each bowl flange section pre-form (166) comprises at least one bowl flange corner section pre-form (170);
- forming bowl flange sections (126) from the bowl flange section pre-forms (166) by shaping processes;
- forming curved side wall edge regions (112) from the side wall edge region pre-forms (162) by shaping processes;
- forming side walls (106) from the side wall pre-forms (154) by shaping processes;
- connecting respective side wall corner regions (116) of two mutually adjacent side walls (106) by means of welding for the purposes of forming curved side wall edge regions (112) of the sink bowl (100);
- connecting respective bowl flange corner sections (128) of two mutually adjacent bowl flange sections (126) by means of welding for the purposes of forming bowl flange corner-regions (132);
wherein the curved side wall corner region (116) merges into the bowl flange corner-region (132) via a curved transition region (134) and wherein a gap (138) is formed in the transition region (134) between mutually opposite edges (136) of the side walls (106), wherein said gap is at least partially closed by at least one tab (140), wherein the at least one tab (140) is connected in one piece manner to a bowl flange corner section (128).

## Revendications

1. Bac d'évier, comprenant
un fond (102),
un rebord de bac (104) et
plusieurs parois latérales (106) reliant le rebord de bac (104) au fond (102), lesquelles présentent chacune au moins une zone de bordure de paroi latérale courbe (112), les zones de bordure de paroi latérale (112) de deux parois latérales (106) voisines l'une de l'autre étant reliées entre elles au moyen d'un cordon de soudure (114) et formant ensemble une zone d'angle (116) de paroi latérale courbe du bac d'évier (100) et chaque paroi latérale (106) étant reliée à un tronçon de rebord de bac (126) en formant une seule pièce, **caractérisé en ce que** les tronçons de rebord de bac (126) présentent chacun un tronçon d'angle de rebord de bac (128), des tronçons d'angle de rebord de bac (128) de deux tronçons de rebord de bac (126) voisins l'un de l'autre étant reliés entre eux par un cordon de soudure (130) et formant ensemble une zone d'angle (132) du rebord de bac (104), la zone d'angle de paroi latérale courbe (116) se transformant en zone d'angle (132) de rebord de bac au moyen d'une zone transitoire courbe (134), et un espace (138) étant formé dans la zone transitoire (134) entre des bords (136), se faisant face, des parois latérales (106), espace fermé du moins en partie par au moins une languette (140), l'au moins une languette (140) étant reliée à un tronçon d'angle de rebord de bac (128) en formant une seule pièce.

2. Bac d'évier selon la revendication 1, **caractérisé en ce que** l'espace (138) est fermé, du moins en partie, par deux languettes (140).

3. Bac d'évier selon la revendication 2, **caractérisé en ce que** les deux languettes (140) sont reliées entre elles par un cordon de soudure (130).

4. Bac d'évier selon l'une quelconque des revendications 1 à 3, **caractérisé en ce que** le bac d'évier (100) est formé au travers d'opérations de déformation à partir d'une préforme de bac d'évier (150) essentiellement plane.

5. Bac d'évier selon la revendication 4, **caractérisé en ce qu'**une préforme de languette (170), à partir de laquelle une languette (140) est formée, est configurée essentiellement en rectangle dans la préforme de bac d'évier (150).

6. Bac d'évier selon l'une quelconque des revendications 4 ou 5, **caractérisé en ce qu'**une préforme de languette (174), à partir de laquelle une languette (140) est formée par déformation, est séparée, dans la préforme de bac d'évier (150), d'une préforme de zone de bordure de paroi latérale (162) à partir de laquelle une zone de bordure de paroi latérale courbe (112) est formée par déformation.

7. Bac d'évier selon la revendication 6, **caractérisé en ce que**, dans la préforme de bac d'évier (150), la ligne de séparation (178) est essentiellement parallèle à un bord (180) de la préforme de zone de bordure de paroi latérale (162).

8. Bac d'évier selon l'une quelconque des revendications 6 ou 7, **caractérisé en ce qu'**une entaille (182) est prévue, dans la préforme de bac d'évier (150), entre une préforme de tronçon d'angle de rebord de bac (170), à partir de laquelle un tronçon d'angle de rebord de bac (128) est formé, et la préforme de zone de bordure de paroi latérale (162).

9. Bac d'évier selon la revendication 8, **caractérisé en ce que**, dans la préforme de bac d'évier (150), l'entaille part de la ligne de séparation (178).

10. Bac d'évier selon l'une quelconque des revendications 8 ou 9, **caractérisé en ce que**, dans la préforme de bac d'évier (150), l'entaille (182) est transversale à la ligne de séparation (178).

11. Bac d'évier selon l'une quelconque des revendications 1 à 10, **caractérisé en ce que** les tronçons d'angle de rebord de bac (128) sont reliés entre eux par deux tronçons de rebord de bac (126) voisins l'un de l'autre au moyen d'un cordon de soudure au laser ou d'un cordon de soudure au plasma.

12. Bac d'évier selon l'une quelconque des revendications 1 à 11, **caractérisé en ce que** le bac d'évier (100) ne présente pas d'élément d'angle de rebord de bac (186) séparé disposé entre deux tronçons de rebord de bac (126).

13. Procédé de fabrication d'un bac d'évier (100), comportant les étapes suivantes :
- Découdrage d'une préforme de bac d'évier (150) dans un matériau de départ, la préforme de bac d'évier (150) comprenant une préforme de fond (152) et plusieurs préformes de paroi latérale (154), chaque préforme de paroi latérale (154) présentant au moins une préforme de zone de bordure de paroi latérale (162) et étant reliée à une préforme de tronçon de rebord de bac (166) en formant une seule pièce, et chaque préforme de tronçon de rebord de bac (166) comprenant au moins une préforme de tronçon d'angle de rebord de bac (170) ;
- Formation de tronçons de rebord de bac (126) par déformation à partir des préformes de tronçon de rebord de bac (166) ;
- Formation de zones de bordure de paroi latérale courbes (112) par déformation à partir des préformes de zone de bordure de paroi latérale (162) ;
- Formation de parois latérales (106) par déformation à partir des préformes de paroi latérale (154) ;
- Liaison de zones de bordure de paroi latérale (112) de deux parois latérales (106) voisines l'une de l'autre par soudage pour former des zones d'angle de paroi latérale courbes (116) du bac de l'évier (100) ;
- Liaison de tronçons d'angle de rebord de bac (128) de deux tronçons de rebord de bac (126) voisins l'un de l'autre par soudage pour former des zones d'angle de rebord de bac (132) ;
la zone d'angle de paroi latérale courbe (116) se transformant en zone d'angle (132) de rebord de bac au moyen d'une zone transitoire courbe (134), et un espace (138) étant formé dans la zone transitoire (134) entre des bords (136), se faisant face, des parois latérales (106), espace fermé du moins en partie par au moins une languette (140), l'au moins une languette (140) étant reliée à un tronçon d'angle (128) de rebord de bac en formant une seule pièce.
